# EUROPEAN PATENT SPECIFICATION

(11) **EP 4 089 390 B1**
(45) Date of publication and mention of the grant of the patent: **02.07.2025**
(21) Application number: 21738941.0
(22) Date of filing: 04.01.2021
(51) Int. Cl.: G01M 99/00, F03D 1/06, F03D 17/00, F16C 19/52, F16C 41/00, G01M 13/045

(54) **CONDITION MONITORING DEVICE AND WIND TURBINE GENERATION APPARATUS INCLUDING CONDITION MONITORING DEVICE**
ZUSTANDSÜBERWACHUNGSVORRICHTUNG UND DAMIT VERSEHENE WINDENERGIEANLAGE
DISPOSITIF DE SURVEILLANCE D'ÉTAT ET DISPOSITIF DE GÉNÉRATION D'ÉNERGIE ÉOLIENNE POURVU D'UN DISPOSITIF DE SURVEILLANCE D'ÉTAT

(30) Priority: 06.01.2020 JP 2020000302
(43) Date of publication of application: 16.11.2022
(73) Proprietor: NTN Corporation, Osaka-shi, Osaka 550-0003 (JP)
(72) Inventor: HASEBA, Takashi, Kuwana-shi, Mie 511-8678 (JP)
(74) Representative: Bockhorni & Brüntjen Partnerschaft Patentanwälte mbB
(86) International application number: PCT/JP2021/000013
(87) International publication number: WO 2021/141003

(56) References cited:
- EP-A1- 2 985 574
- WO-A1-2014/167888
- JP-A- 2010 169 439
- JP-A- 2013 011 232
- JP-A- 2013 011 232
- JP-A- 2017 173 321
- JP-A- 2017 173 321
- JP-A- 2018 092 232
- JP-A- H04 372 022
- US-A- 5 636 124
- US-A1- 2016 087 911
- US-A1- 2016 169 717

## Description

### TITLE OF INVENTION

Condition Monitoring Device and Wind Turbine Generation Apparatus Including Condition Monitoring Device

### TECHNICAL FIELD

The present invention relates to a condition monitoring device that executes a measurement process for monitoring a condition of a mechanical component in response to reception of a trigger signal, and more particularly to a condition monitoring device for a wind turbine generation apparatus.

### BACKGROUND ART

In a wind turbine generation apparatus, the main shaft connected to blades receiving wind is rotated, and after the gearbox increases the speed of rotation of the main shaft, the rotor of the generator is rotated to generate electric power. Each of the rotation axes of the main shaft, the gear box, and the generator is rotatably supported by a rolling bearing. A condition monitoring system is known that diagnoses a condition of such a bearing using measurement data by a vibration sensor fixed to the bearing.

Some of such condition monitoring systems for wind turbine generation apparatuses include a condition monitoring device that executes a measurement process of performing measurement with a vibration sensor in response to reception of a trigger signal (for example, see Japanese Patent Laying-Open No. 2019-52964 (PTL 1)).

More general condition monitoring devices are disclosed in EP 2 985 574 A1, US 5 636 124 A and US 2016/169717 A1.

### CITATION LIST

### PATENT LITERATURE

PTL 1: Japanese Patent Laying-Open No. 2019-52964

### SUMMARY OF INVENTION

### TECHNICAL PROBLEM

In a condition monitoring system for a wind turbine generation apparatus that executes a vibration measurement process in response to reception of a trigger signal, a trigger source producing a trigger signal is provided outside or inside a condition monitoring device. The trigger source outputs a fixed time trigger signal to the condition monitoring device on a specified time. The condition monitoring device executes a measurement process corresponding to the fixed time trigger signal (hereinafter also referred to as "fixed time measurement process") for a certain time in response to reception of the fixed time trigger signal from the trigger source.

In a wind turbine generation apparatus, abrupt events such as lightning strikes, earthquakes, and wind gusts may cause damage to bearings and gears. Data obtained when such abrupt events occur may serve as valuable data for diagnosing a condition of the wind turbine generation apparatus. Unfortunately, in the fixed time measurement process, a measurement process is not started until the specified time is reached. With the fixed time measurement, therefore, it is difficult to measure data when abrupt events occur. Thus, it is desirable to allow the trigger source to generate a trigger signal (hereinafter also referred to as "event trigger signal") different from the fixed time trigger signal when an abrupt event occurs and to execute a measurement process (hereinafter also referred to as "event measurement process") corresponding to the event trigger signal.

Since the fixed time measurement process is repeatedly executed every specified time, a process involving a smaller data volume is executed in the fixed time measurement process. Furthermore, the operation is performed with a smaller measurement data volume, for example, such that measurement is not carried out in an idle state. On the other hand, the event measurement process is executed abruptly and yields measurement data to be used for diagnosis of the wind turbine generation apparatus. Therefore, a process involving a larger data volume is executed in order to obtain more detailed data. Thus, the content of the event measurement process differs from the content of the fixed time measurement process, and it can be said that the event measurement process has a higher priority than the fixed time measurement process.

Suppose that when the condition monitoring device receives an event trigger signal while executing the fixed time measurement process, the event measurement process is started after the fixed time measurement process being executed is completed. In this case, the start timing of the event measurement process with a high priority may be delayed. To cope with this, it may be possible to simultaneously perform the fixed time measurement process and the event measurement process in parallel, but an additional processor (such as a central processing unit (CPU) and a memory) for handling the parallel process is required, and it is sometimes difficult to reserve a space for installing an additional processor in a compact wind turbine generation apparatus.

The present disclosure is made to solve the problem above and aimed to suppress delay in the start timing of a measurement process with a high priority without installing an additional processor.

### SOLUTION TO PROBLEM

(1) A condition monitoring device according to claim 1 executes a measurement process in response to reception of a trigger signal. The condition monitoring device includes a setting unit that sets a priority of a received trigger signal based on a type of the received trigger signal, and a measurement processing unit that executes the measurement process. When the trigger signal is received and when a measurement process resulting from a trigger signal having a priority lower than a priority of the received trigger signal is being executed, the measurement processing unit suspends the measurement process being executed and starts a measurement process corresponding to the received trigger signal.
(2) In an aspect, when the trigger signal is received and when a measurement process resulting from a trigger signal having a priority higher than a priority of the received trigger signal is being executed, the measurement processing unit discards the received trigger signal and continues the measurement process being executed.
(3) In an aspect, when the trigger signal is received and when a measurement process resulting from a trigger signal having a same priority as a priority of the received trigger signal is being executed, the measurement processing unit registers the received trigger signal and executes a measurement process corresponding to the registered trigger signal successively after completion of the measurement process being executed.
(4) When a trigger signal having a first priority is received and when a measurement process resulting from a trigger signal having the first priority is being executed, the measurement processing unit discards the received trigger signal having the first priority and continues the measurement process being executed. When a trigger signal having a second priority higher than the first priority is received and when a measurement process resulting from a trigger signal having the second priority is being executed, the measurement processing unit registers the received trigger signal having the second priority and executes a measurement process corresponding to the registered trigger signal successively after completion of the measurement process being executed.
(5) In an aspect, the measurement process includes a process of outputting a measurement value of vibration of a bearing installed in a wind turbine generation apparatus.
(6) A wind turbine generation apparatus according to the present disclosure is a wind turbine generation apparatus including the condition monitoring device described above.

### ADVANTAGEOUS EFFECTS OF INVENTION

In the configuration above, when a trigger signal is received and a measurement process having a priority lower than that of the received trigger signal is being executed, the measurement processing unit suspends the measurement process being executed and starts a measurement process corresponding to the received trigger signal. This configuration suppresses delay in the start timing of a measurement process having a higher priority due to a measurement process having a lower priority being executed. Furthermore, since the measurement process being executed with a lower priority is suspended, there is no need for installing an additional processor for handling the parallel process. As a result, delay in the start timing of a measurement process having a higher priority can be suppressed without installing an additional processor. As a result, data is measured at a timing as required, and the presence or absence of abnormality of an apparatus that is a measurement target can be determined accurately based on the measured data.

### BRIEF DESCRIPTION OF DRAWINGS

Fig. 1 is a diagram schematically showing a wind turbine generation apparatus to which a condition monitoring device is applied.
Fig. 2 is a functional block diagram showing a functional configuration of a condition monitoring system.
Fig. 3 is a functional block diagram showing a functional configuration of the condition monitoring device in detail.
Fig. 4 is a diagram of an exemplary setting table used for setting the priority of a trigger signal and a measurement type.
Fig. 5 is a flowchart showing an exemplary process of the condition monitoring device.
Fig. 6 is a diagram illustrating patterns of the measurement process executed by the condition monitoring device.

### DESCRIPTION OF EMBODIMENTS

Embodiments of the present disclosure will be described below with reference to the drawings. In the following drawings, the same or corresponding parts are denoted by the same reference numerals and a description thereof is not repeated.

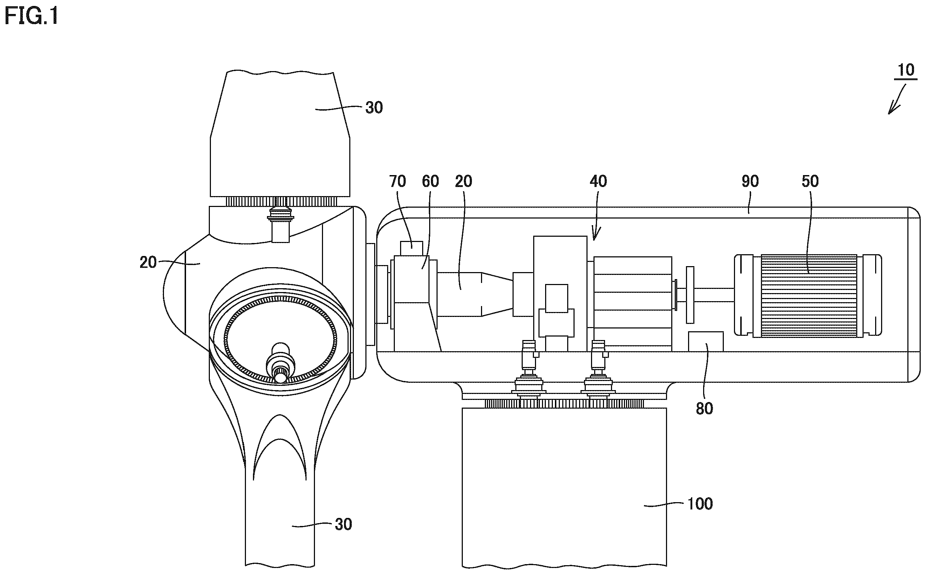

Fig. 1 is a diagram schematically showing a configuration of a wind turbine generation apparatus 10 to which a condition monitoring device 80 according to the present embodiment is applied. Wind turbine generation apparatus 10 includes a main shaft 20, a blade 30, a gearbox 40, a generator 50, a main shaft bearing (hereinafter simply referred to as "bearing") 60, a vibration sensor 70, and a condition monitoring device 80. Gearbox 40, generator 50, bearing 60, vibration sensor 70, and condition monitoring device 80 are stored in a nacelle 90. Nacelle 90 is supported by a tower 100.

Main shaft 20 extends into nacelle 90 to be connected to the input shaft of gearbox 40 and is rotatably supported by bearing 60. Main shaft 20 then transmits rotational torque generated by blade 30 receiving wind power to the input shaft of gearbox 40. Blade 30 is provided at the tip end of main shaft 20 and converts wind power into rotational torque to be transmitted to main shaft 20.

Bearing 60 is fixed in nacelle 90 and rotatably supports main shaft 20. Bearing 60 is configured with a rolling bearing, for example, configured with a spherical roller bearing, a tapered roller bearing, a cylindrical roller bearing, or a ball bearing. These bearings may be a single row or a double row.

Gearbox 40 is provided between main shaft 20 and generator 50 to increase the rotational speed of main shaft 20 for output to generator 50. As an example, gearbox 40 is configured with a gear speed-increasing mechanism including a planetary gear train, an intermediate shaft, and a high speed shaft. Although not shown, a plurality of bearings rotatably supporting a plurality of shafts are also provided in gearbox 40.

Generator 50 is connected to the output shaft of gearbox 40 to generate electric power with the rotational torque received from gearbox 40. Generator 50 is configured with, for example, an induction generator. A bearing rotatably supporting the rotor is also provided in generator 50.

Vibration sensor 70 is fixed to bearing 60. Vibration sensor 70 measures the vibration waveform of bearing 60 and outputs the measured vibration waveform data to condition monitoring device 80. Vibration sensor 70 is configured with, for example, an acceleration sensor having a piezoelectric element.

Condition monitoring device 80 is provided inside nacelle 90. Condition monitoring device 80 is connected to vibration sensor 70 and stores the detection result by vibration sensor 70 for a certain time. Condition monitoring device 80 then executes a measurement process using the detection result by vibration sensor 70 in response to reception of a trigger signal from an external device and transmits data obtained by the measurement process (hereinafter also referred to as "measurement data") to an external data server.

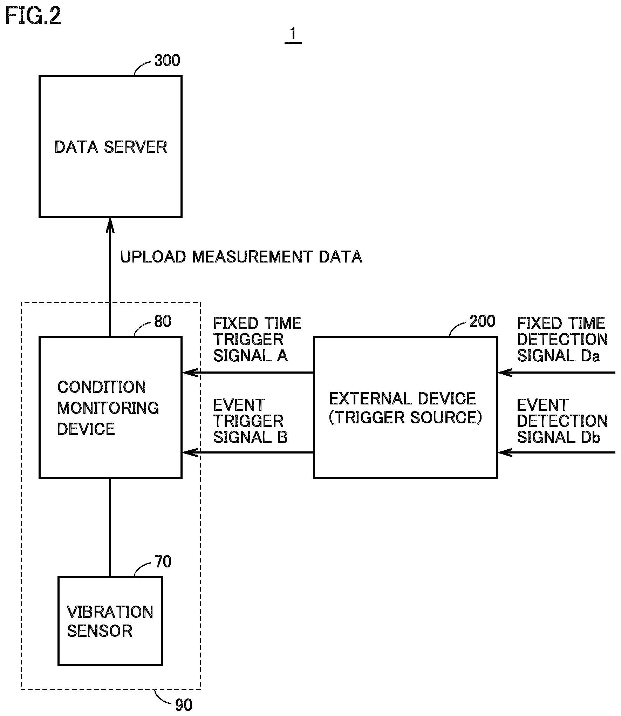

Fig. 2 is a functional block diagram showing a functional configuration of a condition monitoring system 1 including vibration sensor 70 and condition monitoring device 80 shown in Fig. 1. Condition monitoring system 1 includes an external device 200 serving as a trigger source and a data server 300, in addition to vibration sensor 70 and condition monitoring device 80 described above.

Vibration sensor 70 and condition monitoring device 80 are provided inside nacelle 90 as described above. On the other hand, external device 200 and data server 300 are provided outside nacelle 90.

When a detection signal is externally input, external device 200 outputs a trigger signal corresponding to the detection signal to condition monitoring device 80 via wired communication or wireless communication. The detection signal input to external device 200 includes a "fixed time detection signal Da" and an "event detection signal Db". The "fixed time detection signal Da" is a signal indicating that a predetermined specified time has come. The "event detection signal Db" is a signal indicating that an abrupt event that may cause damage to wind turbine generation apparatus 10 is detected. The event detection signal Db includes a signal indicating that abnormal vibration is detected, a signal indicating a lightning strike is detected, a signal indicating a temperature variation exceeding a reference value is detected, a signal indicating that a wind speed change exceeding a reference value is detected, a signal indicating that a wind direction change exceeding a reference value is detected, and a signal indicating that emergency stop is detected.

When a fixed time detection signal Da is externally input, external device 200 outputs a "fixed time trigger signal A" corresponding to the fixed time detection signal Da to condition monitoring device 80. When an event detection signal Db is externally received, external device 200 outputs an "event trigger signal B" corresponding to the event detection signal Db to condition monitoring device 80. Examples of external device 200 include a programmable logic controller (PLC), supervisory control and data acquisition (SCADA), and a computer for measurement.

Although one external device 200 is illustrated in Fig. 2, external device 200 may be divided into two or more. Furthermore, although external device 200 is provided outside nacelle 90 in Fig. 2, external device 200 may be provided inside nacelle 90. For example, an external device having the function of outputting a fixed time trigger signal A may be provided inside nacelle 90, and an external device having the function of outputting an event trigger signal B may be provided outside nacelle 90.

In response to reception of a trigger signal (fixed time trigger signal A or event trigger signal B) from external device 200, condition monitoring device 80 executes a measurement process using the detection result by vibration sensor 70 and transmits (uploads) measurement data obtained by the measurement process to data server 300.

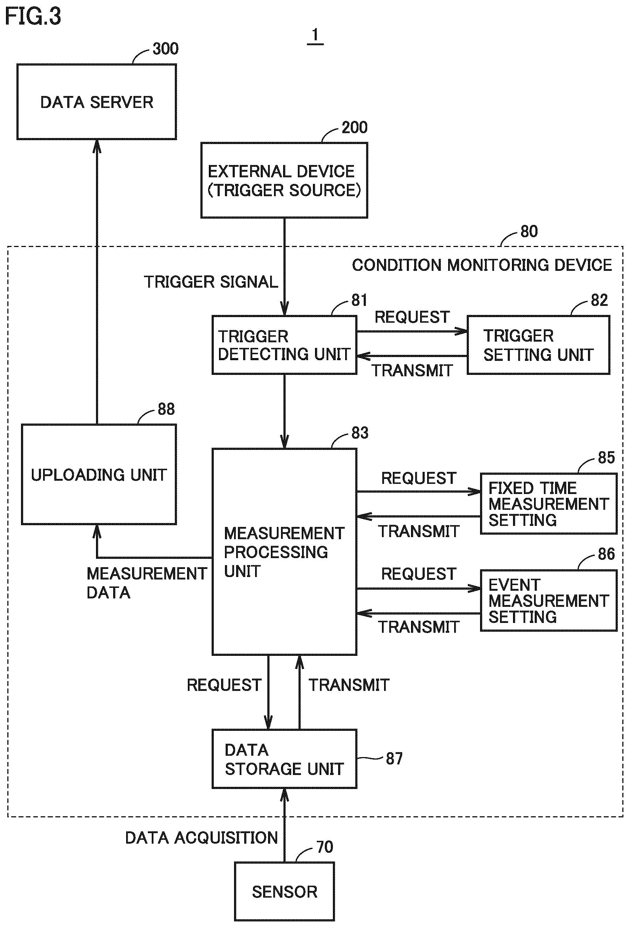

Fig. 3 is a functional block diagram showing a functional configuration of condition monitoring device 80 in detail. Condition monitoring device 80 includes a trigger detecting unit 81, a trigger setting unit 82, a measurement processing unit 83, a fixed time measurement setting unit 85, an event measurement setting unit 86, a data storage unit 87, and an uploading unit 88.

Upon receiving a trigger signal from external device 200, trigger detecting unit 81 stores the time when the trigger signal is received and requests trigger setting unit 82 to set the priority and the measurement type corresponding to the received trigger signal. Trigger setting unit 82 sets the priority and the measurement type corresponding to the trigger signal received from trigger detecting unit 81 and transmits the result as a trigger setting result to trigger detecting unit 81.

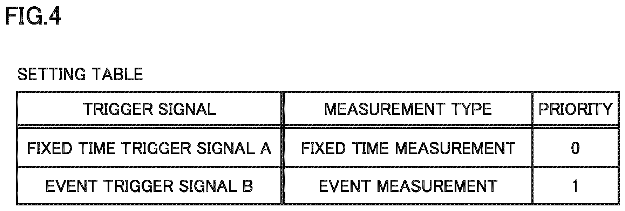

Fig. 4 is a diagram of an exemplary setting table used to set the priority and the measurement type of a trigger signal. As shown in Fig. 4, in this setting table, "fixed time measurement" is set as the measurement type and "0" is set as the priority for the fixed time trigger signal A. "Event measurement" is set as the measurement type and "1" is set as the priority for the event trigger signal B. The priority "1" is meant to be higher than the priority "0". Trigger setting unit 82 refers to the setting table as shown in Fig. 4 to set the priority and the measurement type corresponding to a trigger signal received from trigger detecting unit 81 and transmits the result as a trigger setting result to trigger detecting unit 81.

Returning to Fig. 3, upon receiving the trigger setting result from trigger setting unit 82, trigger detecting unit 81 notifies measurement processing unit 83 of the trigger setting result received from trigger setting unit 82, together with the time when the trigger signal is received.

Measurement processing unit 83 is configured to execute a measurement process in accordance with the notification from trigger detecting unit 81. When the measurement type included in the trigger setting result given from trigger detecting unit 81 is "fixed time measurement", measurement processing unit 83 requests fixed time measurement setting unit 85 to set the process content of the fixed time measurement. In response to the request from measurement processing unit 83, fixed time measurement setting unit 85 sets the content of the fixed time measurement process and returns the set process content to measurement processing unit 83. In the present embodiment, the fixed time measurement process is set to the content "measurement data for a period until a predetermined time Ta has passed from reception of a fixed time trigger signal A is output to data server 300".

On the other hand, when the measurement type included in the trigger setting result given from trigger detecting unit 81 is "event measurement", measurement processing unit 83 requests event measurement setting unit 86 to set the content of the event measurement process. In response to the request from measurement processing unit 83, event measurement setting unit 86 sets the content of the event measurement process and returns the set process content to measurement processing unit 83. In the present embodiment, the event measurement process is set to the content "measurement data for a period until a predetermined time Tb has passed from a predetermined time before the time when the event trigger signal B is received is output to data server 300". In this way, the content of the event measurement process differs from the content of the fixed time measurement process.

The contents of the fixed time measurement process and the event measurement process are illustrated only by way of example and are not limited to the contents described above. For example, the fixed time measurement process may be a process involving a smaller data volume since it is a process that is always repeatedly carried out, whereas the event measurement process may be a process involving a larger data volume in order to obtain more detailed data.

Measurement processing unit 83 reads measurement data stored in data storage unit 87 in accordance with the process content received from fixed time measurement setting unit 85 or event measurement setting unit 86 and outputs the read measurement data to uploading unit 88.

When the fixed time measurement process is to be executed, measurement processing unit 83 requests data storage unit 87 to transmit measurement data for a period until a predetermined time Ta has passed from reception of a fixed time trigger signal A. When the event measurement process is to be executed, measurement processing unit 83 requests data storage unit 87 to transmit measurement data for a period until a predetermined time Tb has passed from a predetermined time before an event trigger signal B is received.

Data storage unit 87 always acquires measurement data by vibration sensor 70 and stores the acquired measurement data for a certain period (a period sufficiently longer than the predetermined times Ta and Tb), together with the measurement time. Data storage unit 87 reads measurement data for a period requested by measurement processing unit 83 from among the stored measurement data and transmits the read measurement data to measurement processing unit 83. Measurement processing unit 83 outputs the measurement data received from data storage unit 87 to uploading unit 88.

Uploading unit 88 outputs (uploads) the measurement data received from measurement processing unit 83 to data server 300 via wired communication or wireless communication, together with the time when a trigger signal is received and the trigger setting result by trigger setting unit 82.

Data server 300 performs a process of diagnosing a condition of wind turbine generation apparatus 10, based on the measurement data received from uploading unit 88.

### <Priority of Trigger Signal and Measurement Process>

The fixed time measurement process is repeatedly executed every specified time. By comparison, the event measurement process is executed when abrupt events such as lightning strikes, earthquakes, and wind gusts occur, and the measurement data obtained by the event measurement process is used for diagnosis of wind turbine generation apparatus 10. Therefore, it can be said that the event measurement process has a higher priority than the fixed time measurement process.

Suppose that when an event trigger signal B is received while the fixed time measurement process is being executed, the event measurement process is started after the fixed time measurement process being executed is completed. In this case, however, the start timing of the event measurement process with a higher priority may be delayed. To cope with this, it may be possible to simultaneously perform the fixed time measurement process and the event measurement process in parallel, but an additional processor (such as a CPU and a memory) for handling the parallel process is required, and it is sometimes difficult to reserve a space for installing an additional processor in nacelle 90 of compact wind turbine generation apparatus 10.

In view of the above, condition monitoring device 80 according to the present embodiment sets a priority for a trigger signal received from external device 200. Specifically, as described above, the priority of a fixed time trigger signal A is set to "0", and the priority of an event trigger signal B is set to "1" higher than zero. Then, when an event trigger signal B is received and the fixed time measurement process caused by a fixed time trigger signal A having a priority "0" lower than the priority "1" of the event trigger signal B is being executed, condition monitoring device 80 halts the fixed time measurement process being executed and starts the event measurement process corresponding to the received event trigger signal B. This can suppress delay in the starting timing of an event measurement process having a higher priority.

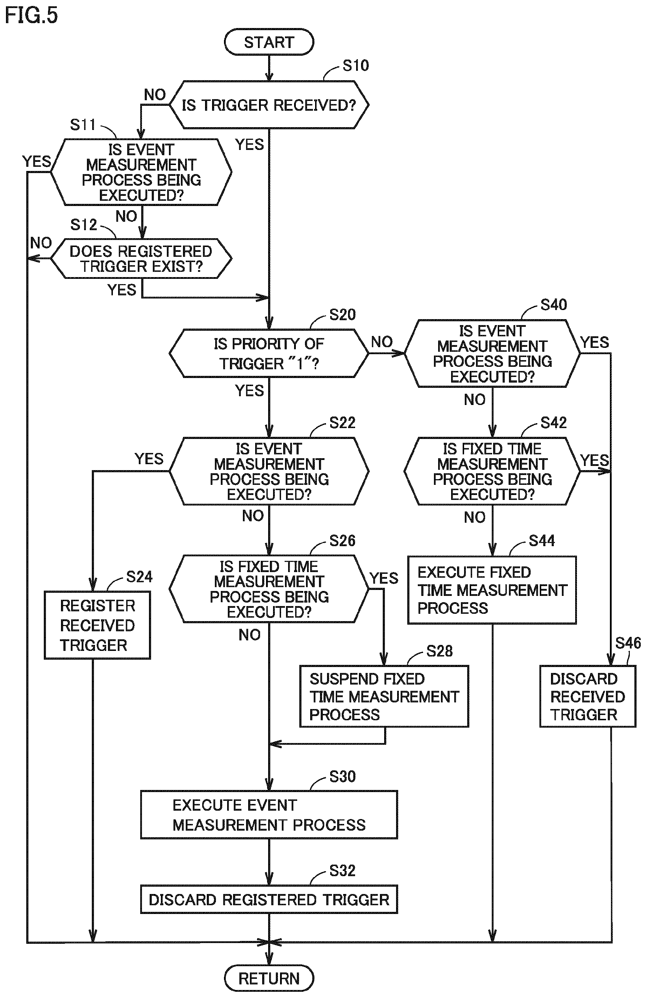

Fig. 5 is a flowchart showing an exemplary process in which condition monitoring device 80 executes a measurement process. This flowchart is repeatedly performed every time a predetermined condition is met (for example, at predetermined intervals). First of all, condition monitoring device 80 determines whether a trigger signal is received from external device 200 (step S10).

### [If a trigger signal is received]

If condition monitoring device 80 receives a trigger signal from external device 200 (YES at step S10), condition monitoring device 80 refers to the setting table above shown in Fig. 4 and determines whether the priority of the trigger signal received this time is "1" (that is, whether the trigger signal is an event trigger signal B) (step S20).

### (If an event trigger signal B with priority "1" is received)

If the priority of the received trigger signal is "1" (YES at step S20), that is, if an event trigger signal B is received, condition monitoring device 80 determines whether the event measurement process having the same priority "1" as the priority "1" of the event trigger signal B received this time is being executed (step S22).

If the event measurement process is being executed (YES at step S22), condition monitoring device 80 registers the event trigger signal B received this time (step S24). Thus, the event measurement process being executed continues as it is. Subsequently, condition monitoring device 80 skips the subsequent process and moves the process to return.

The event trigger signal B registered at step S24 is treated as "registered trigger signal" in the next and subsequent computation cycles. The event measurement process corresponding to the registered trigger signal is executed successively after completion of the event measurement process being executed.

If the event measurement process is not being executed (NO at step S22), condition monitoring device 80 determines whether the fixed time measurement process having a priority "0" lower than the priority of the event trigger signal B received this time is being executed (step S26).

If the fixed time measurement process is not being executed (NO at step S26), condition monitoring device 80 executes the event measurement process corresponding to the event trigger signal B received this time (step S30).

On the other hand, if the fixed time measurement process is being executed (YES at step S26), condition monitoring device 80 suspends the fixed time measurement process being executed (step S28) and executes the event measurement process corresponding to the event trigger signal B received this time (step S30).

### (If a fixed time trigger signal A with priority "0" is received)

If the priority of the received trigger signal is "0" (NO at step S20), that is, if a fixed time trigger signal A is received, condition monitoring device 80 determines whether the event measurement process having a priority "1" higher than the priority of the received fixed time trigger signal A is being executed (step S40).

If the event measurement process is being executed (YES at step S40), condition monitoring device 80 discards the received fixed time trigger signal A (step S46). Thus, the event measurement process having a priority "1" being executed continues.

If the event measurement process is not being executed (NO at step S40), condition monitoring device 80 determines whether the fixed time measurement process having the same priority "0" as the priority of the received fixed time trigger signal A is being executed (step S42). If the fixed time measurement process is being executed (YES at step S42), condition monitoring device 80 discards the received fixed time trigger signal A (step S46). Thus, the fixed time measurement process having a priority "0" being executed continues.

If the fixed time measurement process is not being executed (NO at step S42), condition monitoring device 80 executes the fixed time measurement process corresponding to the fixed time trigger signal A received this time (step S44).

### [If a trigger signal is not received]

The process performed when it is determined that a trigger signal is not received at step S10 (NO at step S10) will now be described. In this case, condition monitoring device 80 determines whether the event measurement process having a priority "1" is being executed (step S11). If the event measurement process is being executed (YES at step S11), condition monitoring device 80 skips the subsequent process and moves the process to return.

If the event measurement process is not being executed (NO at step S11), condition monitoring device 80 determines whether a registered trigger signal exists (step S12). The registered trigger signal is the event trigger signal B registered at step S24 in the last and preceding computation cycles. If no registered trigger signal exists (NO at step S12), condition monitoring device 80 skips the subsequent process and moves the process to return.

If a registered trigger signal exists (YES at step S12), condition monitoring device 80 executes the process subsequent to step S20 for the registered trigger signal. That is, since the registered trigger signal is an event trigger signal B having a priority "1", the determination by monitoring device 80 at step S20 is YES. Furthermore, since the event measurement process having a priority "1" is not being executed as determined at step S11, the determination at step S22 is NO, and the event measurement process corresponding to the registered trigger signal is executed at step S30.

After step S30, condition monitoring device 80 discards the registered trigger signal (step S32). That is, even when a plurality of registered trigger signals exist, condition monitoring device 80 according to the present embodiment discards the second and subsequent registered trigger signals, because the event measurement process corresponding to the first registered trigger signal has been executed. Thus, the event measurement process corresponding to the second and subsequent registered trigger signals is not executed.

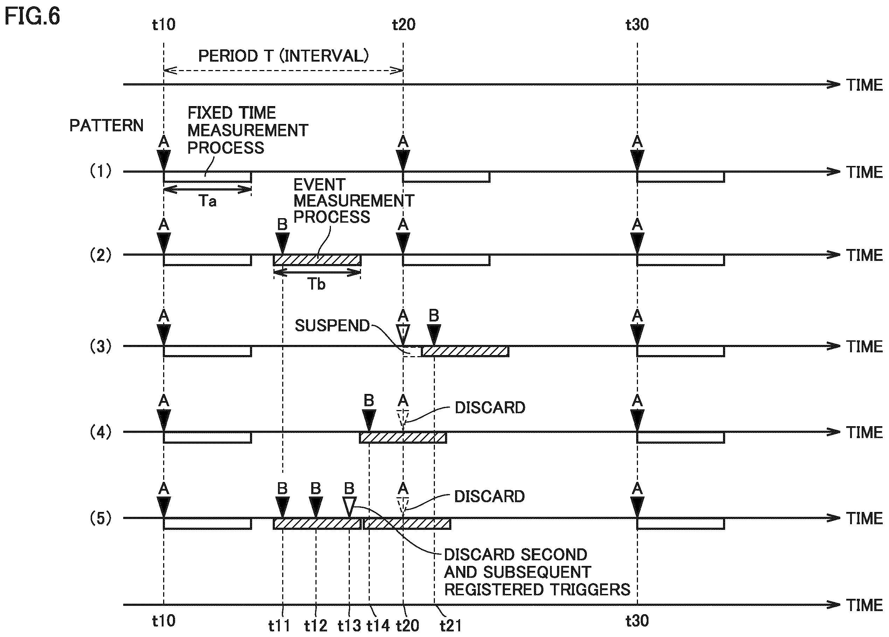

Fig. 6 is a diagram illustrating patterns of the measurement process executed by condition monitoring device 80. In Fig. 6, the horizontal axis shows time, and the vertical axis shows patterns (1) to (5) of the measurement process in order from above. In Fig. 6, in each of the patterns (1) to (5), a fixed time trigger signal A is produced at specified times t10, t20, and t30.

In the pattern (1), an event trigger signal B is not produced at any time. In this case, condition monitoring device 80 executes the fixed time measurement process every time a fixed time trigger signal A is received at specified times t10, t20, and t30. In the present embodiment, the fixed time measurement process is a process of outputting to data server 300 the measurement data for a period until a predetermined time Ta has passed from reception of a fixed time trigger signal A, as described above.

In the pattern (2), an event trigger signal B is produced at time t11 when the fixed time measurement process is not executed. In this case, condition monitoring device 80 executes the event measurement process in response to reception of an event trigger signal B at time t11. In the present embodiment, the event measurement process is a process of outputting to data sever 300 the measurement data for a period until a predetermined time Tb has passed from a predetermined time before the time when an event trigger signal B is received. In the pattern (2), since the period in which the fixed time measurement process is executed does not overlap a period in which the event measurement process is executed, each process is executed as usual.

In the pattern (3), an event trigger signal B is produced at time t21 when the fixed time measurement process corresponding to the fixed time trigger signal A received at the specified time t20 is being executed. In this case, in response to reception of an event trigger signal B at time t21, condition monitoring device 80 suspends the fixed time measurement process being executed and executes the event measurement process corresponding to the event trigger signal B received at time t21. This suppresses delay in the starting timing of the event measurement process having a higher priority. Accordingly, failure to capture measurement data by the event measurement process having a higher priority can be prevented. Furthermore, since the event measurement process is executed after the fixed time measurement process being executed is suspended, there is no need for installing an additional processor for handling the parallel process. As a result, delay of the start timing of a measurement process having a higher priority can be suppressed without installing an additional processor.

In the pattern (4), the specified time t20 is reached during execution of the event measurement process corresponding to the event trigger signal B received at the specified time t14, and a fixed time trigger signal A is produced. In this case, the fixed time trigger signal A produced at the specified time t20 is discarded, and the event measurement process being executed continues. Thus, the event measurement process having a higher priority can be continued without installing an additional processor.

In the pattern (5), during execution of the event measurement process corresponding to the event trigger signal B produced at time t11, a first event trigger signal B is produced at time t12, and a second event trigger signal B is produced at the subsequent time t13. In this case, the first event trigger signal B is registered as a registered trigger signal and executed successively after completion of the event measurement process being executed. Thus, measurement data can be acquired without discarding an event trigger signal B having a higher priority.

The second event trigger signal B is temporarily registered as a registered trigger signal but discarded at the point of time when the event measurement process corresponding to the first event trigger signal B is executed. This suppresses unnecessary continuation of the event measurement process.

In the pattern (5), the specified time t20 is reached during execution of the event measurement process corresponding to the first event trigger signal B produced at time t11, and a fixed time trigger signal A is produced. In this case, the fixed time trigger signal A produced at the specified time t20 is discarded, and the event measurement process being executed continues, in the same manner as in the pattern (4).

As described above, condition monitoring device 80 according to the present embodiment includes trigger setting unit 82 and measurement processing unit 83. Trigger setting unit 82 sets the priority of the received trigger signal based on the type of the received trigger signal. When an event trigger signal B is received and the fixed time measurement process having a priority lower than that of the received event trigger signal B is being executed, measurement processing unit 83 suspends the fixed time measurement process being executed and starts the event measurement process corresponding to the received event trigger signal B. This suppresses delay in the start timing of the event measurement process having a higher priority due to the fixed time measurement process having a lower priority being executed. Furthermore, since the fixed time measurement process being executed with a lower priority is suspended, there is no need for installing an additional processor for handling the parallel process. As a result, delay in the start timing of the event measurement process having a higher priority can be suppressed without installing an additional processor. As a result, data is measured at a timing as required, and the presence or absence of abnormality of wind turbine generation apparatus 10 that is a measurement target can be determined accurately based on the measured data.

Furthermore, when a fixed time trigger signal A is received and the event measurement process having a priority higher than that of the received fixed time trigger signal A is being executed, measurement processing unit 83 according to the present embodiment discards the received fixed time trigger signal A and continues the event measurement process being executed. Thus, the event measurement process having a higher priority can be continued without installing an additional processor.

Furthermore, when an event trigger signal B is received and the event measurement process having the same priority as that of the received event trigger signal B is being executed, measurement processing unit 83 according to the present embodiment registers the received event trigger signal B and executes the event measurement process corresponding to the registered event trigger signal B successively after completion of the event measurement process being executed. Thus, measurement data can be acquired without discarding the event trigger signal B having a higher priority.

Furthermore, when a fixed time trigger signal A having a priority "0" is received and the fixed time measurement process having the same priority "0" as that of the received fixed time trigger signal A is being executed, measurement processing unit 83 according to the present embodiment discards the received fixed time trigger signal A and continues the fixed time measurement process being executed. Thus, unnecessary continuation of the fixed time measurement process having a lower priority can be suppressed.

The embodiment disclosed here should be understood as being illustrative rather than being limitative in all respects. The scope of the present disclosure is shown not in the foregoing description but in the claims, and it is intended that all modifications that come within the meaning of the claims are embraced here.

### REFERENCE SIGNS LIST

1 condition monitoring system, 10 wind turbine generation apparatus, 20 main shaft, 30 blade, 40 gearbox, 50 generator, 60 bearing, 70 vibration sensor, 80 condition monitoring device, 81 trigger detecting unit, 82 trigger setting unit, 83 measurement processing unit, 85 fixed time measurement setting unit, 86 event measurement setting unit, 87 data storage unit, 88 uploading unit, 90 nacelle, 100 tower, 200 external device, 300 data server.

## Claims

1. A condition monitoring device (80) that executes a measurement process in response to reception of a trigger signal, the condition monitoring device (80) comprising:
a setting unit (82) that sets a priority of a received trigger signal based on a type of the received trigger signal; and
a measurement processing unit (83) that executes the measurement process,
wherein when the trigger signal is received and when a measurement process resulting from a trigger signal having a priority lower than a priority of the received trigger signal is being executed, the measurement processing unit (83) suspends the measurement process being executed and starts a measurement process corresponding to the received trigger signal, wherein
the trigger signal may have a first priority or a second priority, **characterized in that**
when a trigger signal having the first priority is received and when a measurement process resulting from a trigger signal having the first priority is being executed, the measurement processing unit (83) discards the received trigger signal having the first priority and continues the measurement process being executed, and
when a trigger signal having the second priority higher than the first priority is received and when a measurement process resulting from a trigger signal having the second priority is being executed, the measurement processing unit (83) registers the received trigger signal having the second priority and executes a measurement process corresponding to the registered trigger signal successively after completion of the measurement process being executed.

2. The condition monitoring device (80) according to claim 1, wherein when the trigger signal is received and when a measurement process resulting from a trigger signal having a priority higher than a priority of the received trigger signal is being executed, the measurement processing unit (83) discards the received trigger signal and continues the measurement process being executed.

3. The condition monitoring device (80) according to any one of claims 1 or 2, wherein the measurement process includes a process of outputting a measurement value of vibration of a bearing (60) installed in a wind turbine generation apparatus (10).

4. A wind turbine generation apparatus (10) comprising the condition monitoring device (80) according to any one of claims 1 to 3.

## Patentansprüche

1. Zustandsüberwachungsvorrichtung (80), die ein Messverfahren als Reaktion auf den Empfang eines Triggersignals ausführt, wobei die Zustandsüberwachungsvorrichtung (80) umfasst:
eine Einstelleinheit (82), die eine Priorität eines empfangenen Triggersignals basierend auf einem Typ des empfangenen Triggersignals einstellt; und
eine Messverarbeitungseinheit (83), die das Messverfahren ausführt,
wobei, wenn das Triggersignal empfangen wird und wenn ein Messverfahren, das aus einem Triggersignal mit einer niedrigeren Priorität als eine Priorität des empfangenen Triggersignals resultiert, ausgeführt wird, die Messverarbeitungseinheit (83) das ausgeführte Messverfahren unterbricht und ein Messverfahren entsprechend dem empfangenen Triggersignal startet, wobei
das Triggersignal eine erste oder eine zweite Priorität haben kann,
**dadurch gekennzeichnet ist, dass**
wenn ein Triggersignal mit der ersten Priorität empfangen wird und wenn ein aus einem Triggersignal mit der ersten Priorität resultierendes Messverfahren ausgeführt wird, die Messverarbeitungseinheit (83) das empfangene Triggersignal mit der ersten Priorität verwirft und das ausgeführte Messverfahren fortsetzt, und
wenn ein Triggersignal mit der zweiten Priorität, die höher als die erste Priorität ist, empfangen wird und wenn ein Messverfahren, das aus einem Triggersignal mit der zweiten Priorität resultiert, ausgeführt wird, registriert die Messverarbeitungseinheit (83) das empfangene Triggersignal mit der zweiten Priorität und führt ein Messverfahren, das dem registrierten Triggersignal entspricht, im Anschluss aus nachdem das Messverfahren ausgeführt wurde.

2. Zustandsüberwachungsvorrichtung (80) nach Anspruch 1, wobei, wenn das Triggersignal empfangen wird und wenn ein Messverfahren, das aus einem Triggersignal mit einer höheren Priorität als der des empfangenen Triggersignals resultiert, ausgeführt wird, die Messverarbeitungseinheit (83) das empfangene Triggersignal verwirft und den laufenden Messvorgang fort setzt.

3. Zustandsüberwachungsvorrichtung (80) nach einem der Ansprüche 1 oder 2, wobei das Messverfahren einen Prozess der Ausgabe eines Messwertes der Vibration eines Lagers (60) umfasst, das in einer Windturbinen-Erzeugungsvorrichtung (10) installiert ist.

4. Windturbinen-Erzeugungsvorrichtung (10) umfassend die Zustandsüberwachungsvorrichtung (80) nach einem der Ansprüche 1 bis 3.

## Revendications

1. Dispositif de surveillance d'état (80) qui exécute un processus de mesure en réponse à la réception d'un signal de déclenchement, le dispositif de surveillance d'état (80) comprenant :
une unité de réglage (82) qui règle une priorité d'un signal de déclenchement reçu sur la base d'un type du signal de déclenchement reçu ; et
une unité de traitement de mesure (83) qui exécute le processus de mesure,
dans lequel, lorsque le signal de déclenchement est reçu et lorsqu'un processus de mesure résultant d'un signal de déclenchement ayant une priorité moins élevée qu'une priorité du signal de déclenchement reçu est en cours d'exécution, l'unité de traitement de mesure (83) suspend le processus de mesure en cours d'exécution et lance un processus de mesure correspondant au signal de déclenchement reçu, dans lequel
le signal de déclenchement peut avoir une première priorité ou une seconde priorité,
**caractérisé en ce que**
lorsqu'un signal de déclenchement ayant la première priorité est reçu et lorsqu'un processus de mesure résultant d'un signal de déclenchement ayant la première priorité est exécuté, l'unité de traitement de mesure (83) rejète le signal de déclenchement reçu ayant la première priorité et poursuit le processus de mesure en cours d'exécution, et **en ce que**
lorsqu'un signal de déclenchement ayant la seconde priorité plus élevée que la première priorité est reçu et lorsqu'un processus de mesure résultant d'un signal de déclenchement ayant la seconde priorité est en cours d'exécution, l'unité de traitement de mesure (83) enregistre le signal de déclenchement reçu ayant la seconde priorité et exécute un processus de mesure correspondant au signal de déclenchement enregistré successivement après l'achèvement du processus de mesure en cours d'exécution.

2. Dispositif de surveillance d'état (80) selon la revendication 1, dans lequel lorsque le signal de déclenchement est reçu et lorsqu'un processus de mesure résultant d'un signal de déclenchement ayant une priorité plus élevée qu'une priorité du signal de déclenchement reçu est en cours d'exécution, l'unité de traitement de mesure (83) rejète le signal de déclenchement reçu et poursuit le processus de mesure en cours d'exécution.

3. Dispositif de surveillance d'état (80) selon l'une quelconque des revendications 1 ou 2, dans lequel le processus de mesure comporte un processus de sortie d'une valeur de mesure de vibration d'un palier (60) installé dans un appareil générateur d'éolienne (10).

4. Appareil générateur d'éolienne (10) comprenant le dispositif de surveillance d'état (80) selon l'une quelconque des revendications 1 à 3.
